# EUROPÄISCHE PATENTSCHRIFT

(11) **EP 0 614 032 B1**
(45) Veröffentlichungstag und Bekanntmachung des Hinweises auf die Patenterteilung: **20.11.1996**
(21) Anmeldenummer: 94102708.8
(22) Anmeldetag: 23.02.1994
(51) Int. Cl.: F16K 31/06

(54) **Magnetventil mit Schmutzfalle**
Solenoid valve having a dirt trap
Soupape magnétique avec recipient d'abrasion

(30) Priorität: 26.02.1993 DE 4305987
(43) Veröffentlichungstag der Anmeldung: 07.09.1994
(73) Patentinhaber: HONEYWELL B.V., NL-1101 EA Amsterdam (NL)
(72) Erfinder: van Prooijen, Frank, NL-7812 MD Emmen (NL); Munsterhuis, Wim, NL-7751 GP Dalen (NL)
(74) Vertreter: Rentzsch, Heinz, Dipl.-Ing.

(56) Entgegenhaltungen:
- US-A- 4 697 619

## Beschreibung

Die Erfindung betrifft ein Magnetventil gemäß Oberbegriff des Anspruchs 1, wie es im Stand der Technik allgemein bekannt ist. Trotz sorgfältiger Bearbeitung der beweglichen Teile des Magnetantriebes läßt es sich insbesondere bei häufig schaltenden Magnetventilen nicht vermeiden, daß mit der Zeit Abrieb an den aneinander gleitenden oder aneinander anschlagenden Teilen entsteht und diese Teilchen mit der Zeit durch Schwerkraft und ggf. unterstützt durch Druckänderungen im Inneren des Antriebes sich in Richtung Schließkörper und Ventilsitz bewegen und sich dort ggf. ablagern. Solche Ablagerungen beeinträchtigen jedoch den dichten Abschluß des Magnetventils.

Aus DE-A 31 35 261 ist ein Magnetventil bekannt, bei dem das Eindringen von Schmutzteilchen in den Raum zwischen Magnetanker und einer die Magnetspule tragenden, den Ankerweg umgebenden Hülse dadurch verhindert ist, daß dieser Raum gegenüber den strömungsführenden Räumen des Ventils durch einen Metallbalg abgedichtet ist.

Desweiteren ist in DE-A 39 27 167 ein Magnetventil beschrieben, bei dem ein horizontal in einer Hülse geführter Magnetanker zusammen mit radialen Durchbrechungen der Hülse das Ventil bildet. Die radiale Zu- oder Abströmung des Mediums leitet etwaige Schmutzteilchen längs der im wesentlichen flachen Stirnseite des Ankers ab, weil keine auf die stirnseitige Öffnung des Ringspalts zwischen Anker und Hülse gerichtete Strömungskomponente vorhanden ist. Zusätzlich können im Strömungsweg eine oder mehrere Stauplatten vorgesehen sein, welche zur Ausbildung labyrinthförmiger Strömungsstrecken führen, in denen sich etwa mitgeführte Fremdkörper ablagern. Bei anderen Ausführungsbeispielen werden entweder durch eine Querschnittsvergrößerung des Strömungsweges oder durch ein abgesetztes Verringern des Außendurchmessers des Ankers Sammelräume für etwaige Schmutzteilchen gebildet.

Aufgabe der Erfindung ist es, die eingangs geschilderten, sich insbesondere bei Impuls- und Langzeitbetrieb von Magnetantrieben einstellenden Abriebprobleme zu beseitigen und ein Magnetventil, insbesondere ein Gasmagnetventil, zu schaffen, welches gegen etwaigen Abrieb aus den aneinander anschlagenden oder aneinander gleitenden Teilen des Antriebes unempfindlich ist. Diese Aufgabe wird gelöst durch die im Anspruch 1 gekennzeichnete Erfindung. Es entsteht zwischen Antrieb und Ventilsitz eine Schmutzfalle, in der sich etwaige Abriebteile sammeln, ohne in den Bereich von Schließkörper und Ventilsitz zu gelangen. Die Anordnung zeichnet sich durch einen äußerst einfachen konstruktiven Aufbau aus und bietet die Möglichkeit, sich im Langzeitbetrieb ansammelnde Abriebteile erforderlichenfalls zu beseitigen.

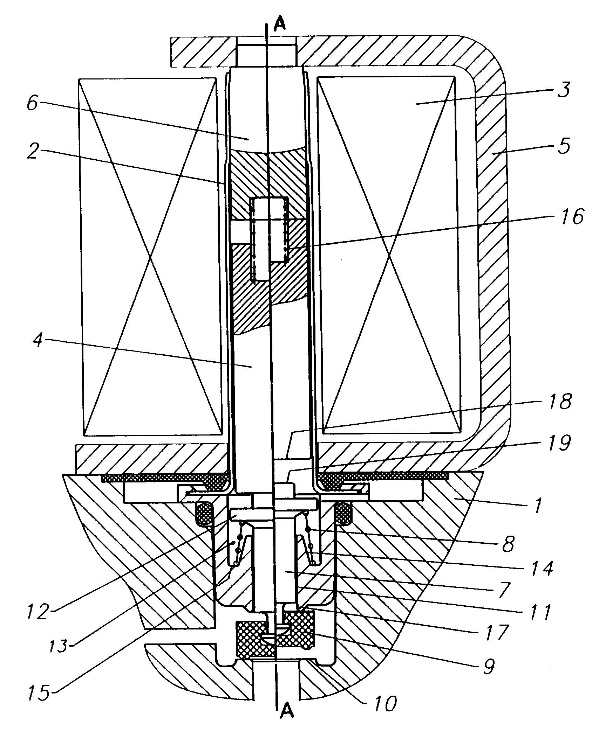

Aus US-A 4 697 619 ist zwar die Anbringung einer umlaufenden Vertiefung in der einem Kragen der Ventilstange zugewandten Stirnseite der Ventilstangenführung bekannt, deren Innenranddurchmesser wesentlich kleiner ist als der Außendurchmesser des Kragens. Diese Vertiefung dient dort der Zentrierung einer zwischen der genannten Vertiefung und dem Kragen eingespannten Schraubenfeder. Die Vertiefung ist dort jedoch als Schmutzfalle nicht geeignet, weil sie entweder (Fig. 1) seitlich offen ist, so daß sich etwa ansammelnder Abrieb in den nachfolgenden Strömungsweg gelangt, oder (Fig. 2) der Magnetantrieb unterhalb bzw. seitlich vom Ventilsitz angeordnet ist und somit der Abrieb nicht in die Vertiefung fällt.

Vorteilhafte Weiterbildungen der Erfindung ergeben sich aus den Unteransprüchen. Sie wird nachfolgend anhand eines in der Zeichnung dargestellten Ausführungsbeispiels erläutert. Dabei ist das Ventil links von der Mittellinie A im stromlosen Zustand und rechts von der Mittellinie bei erregtem Elektromagneten und angezogenem Anker dargestellt.

Am Gehäuse 1 eines Magnetventils ist eine zylindrische Hülse 2 befestigt, welche einerseits als Träger für die Magnetspule 3 und andererseits als Führung für den kolbenförmigen Anker 4 dient. Ein topf- oder bügelförmiges Magnetjoch 5 sorgt zusammen mit einem aus magnetisierbarem Material bestehenden Kern 6 für den magnetischen Rückschluß des durch die Spule 3 erzeugten Magnetfelds. Der Kern 6 dient zugleich als Anschlag für den Anker 4 und kann zur Hubeinstellung im oberen Teil der Hülse 2 verstellbar sein.

Der Anker 4 betätigt über eine Ventilstange 7 und gegen die Kraft einer Feder 8 den Schließkörper 9 des Magnetventils. Die Stange 7 ist in einer zwischen Ventilsitz 10 und Anker 4 befindlichen Ventilstangenführung 11 am schließkörpernahen Ende geführt. Zwischen Schließkörper 9 und Anker 4 ist an der Ventilstange 7 ein schirmartiger Kragen 12 vorgesehen, dessen Außendurchmesser wesentlich größer ist als der Innendurchmesser der Ventilstangenführung 11. Er überdeckt also den Spalt zwischen Ventilstangenführung 11 und Ventilstange 7. Ferner ist die dem Kragen 12 zugewandte Stirnseite der Ventilstangenführung 11 mit einer umlaufenden Vertiefung 13 versehen, in welche etwaige Abriebteile hineinfallen und somit daran gehindert werden, entweder durch die Ventilstangenführung 11 hindurch zum Ventil 9, 10, 17 zu gelangen oder innerhalb der Ventilstangenführung 11 deren Reibung zu erhöhen und die Beweglichkeit der Ventilstange zu behindern. Die der Ventilstange 7 zugewandte Innenwand 14 der Vertiefung 13 fällt schräg zum Boden 15 der Vertiefung 13 hinab, und die Schrauben- oder Kegelfeder 8 stützt sich zwischen dieser Bodenfläche 15 und dem Kragen 12 ab.

Eine Rückstellfeder 16 zwischen Kern 6 und Anker 4 drückt bei stromloser Erregerwicklung 3 den Anker 4 und mit ihm über die Ventilstange 7 den Schließkörper 9 gegen den Ventilsitz 10. Diese Position zeigt die Darstellung links von der Mittellinie A.

Fließt Strom durch die Wicklung 3, so hebt der Anker 4 von der Ventilstange 7 ab und die Feder 8 drückt über den Kragen 12 die Ventilstange nach oben. Damit öffnet das Ventil 9, 10 und der Schließkörper 9 verschließt statt dessen den anderen Ventilsitz 17. Diese Position ist rechts von der Mittellinie A wiedergegeben.

Jeglicher Abrieb, der in der Gleitbahn des Ankers 4 in der Hülse 2 oder an den Anschlagflächen zwischen Anker 4 und Ventilstange 7 entsteht, wird durch den Kragen 12 daran gehindert, in den Führungsspalt zwischen Ventilstange 7 und Ventilstangenführung 11 einzudringen. Solcher Abrieb oder sonstiger Schmutz sammelt sich vielmehr in der umlaufenden Vertiefung 13 an.

## Patentansprüche

1. Magnetventil mit
a) einer vertikal beweglichen, einen Ventilschließkörper (9) tragenden Ventilstange (7),
b) einem von der Ventilstange oberhalb des Schließkörpers getragenen Magnetanker (4), sowie
c) einer zwischen Magnetanker (4) und Schließkörper (9) die Ventilstange (7) umgebenden Ventilstangenführung (11),
**dadurch gekennzeichnet,** daß
d) an der Ventilstange (7) zwischen Ventilstangenführung (11) und Anker (4) ein schirmartiger Kragen (12) angeordnet ist, dessen Außendurchmesser wesentlich größer ist als der Innendurchmesser der Ventilstangenführung (11); und
e) die dem Kragen (12) zugewandte Stirnseite der Ventilstangenführung (11) als Schmutzfalle eine umlaufende, nur zum Kragen hin offene Vertiefung (13) aufweist, deren Innenranddurchmesser wesentlich kleiner ist als der Außendurchmesser des Kragens (12).

2. Magnetventil nach Anspruch 1, **dadurch gekennzeichnet,** daß die der Ventilstange (7) zugewandte Innenwand (14) der Vertiefung (13) von der dem Kragen (12) zugewandten Oberseite der Ventilstangenführung (11) schräg zum Boden (15) der Vertiefung abfällt.

3. Magnetventil nach Anspruch 1 oder 2, **gekennzeichnet durch** eine zwischen dem Kragen (12) und dem Boden (15) der Vertiefung (13) eingespannte Schrauben- oder Kegelfeder (8).

## Claims

1. A solenoid valve comprising:
a) a vertically movable valve rod (7) carrying a closure member (9);
b) a solenoid armature (4) supported above said closure member by said valve rod; and
c) valve guiding means (11) surrounding said valve rod (7) and located between said armature (4) and said closure member (9), **characterized in that**
d) an umbrella-shaped collar (12) is provided at said valve rod (7) in a position between said valve guiding means (11) and said armature (14), with the outer diameter of said collar being essentially larger than the internal diameter of the valve-guiding means (11); and
(e) the front surface of the valve-guiding means (11) facing said collar (12) is provided with a surrounding recess (13), which is open only in the direction to said colloar, whereat the diameter of its internal edge is essentially smaller than the outer diameter of the collar (12).

2. The solenoid valve according to claim 1, **characterized in that** the internal wall (14) of said recess (13) facing said valve rod (7) is inclined from the upper surface of said valve guiding means (11) ) facing the collar (12) to the bottom (15) of the recess (13).

3. The solenoid valve according to claim 1 or 2, **characterized by** a coil spring or conical spring (8) provided between said collar (12) and the bottom (15) of said recess (13).

## Revendications

1. Soupape magnétique comportant
a) une tige de soupape (7) mobile verticalement et portant un corps de fermeture de soupape (9),
b) une armature magnétique (4) portée par la tige de soupape au-dessus du corps de fermeture, ainsi que
c) un guide (11) pour la tige de soupape, qui entoure la tige de soupape (7), entre l'armature magnétique (4) et le corps de fermeture (9),
caractérisée en ce que
d) sur la tige de soupape (7) est disposé, entre le guide (11) de la tige de soupape et l'armature (4), un collet formant écran (12), dont le diamètre extérieur est nettement supérieur au diamètre intérieur du guide (11) de la tige de soupape, et
e) la face frontale, tournée vers le collet (12), du guide (11) de la tige de soupape comporte, en tant que piège à saletés, un renfoncement circonférentiel (13), qui est ouvert uniquement en direction du collet et dont le diamètre du bord intérieur est nettement inférieur au diamètre extérieur du collet (12).

2. Soupape magnétique selon la revendication 1, caractérisée en ce que la paroi intérieure (14), située du côté de la tige de soupape (7), du renfoncement (13) descend obliquement vers le fond (15) du renfoncement à partir du côté supérieur, tourné vers le collet (12), du guide (11) de la tige de soupape.

3. Soupape magnétique selon la revendication 1 ou 2, caractérisée par un ressort hélicoïdal ou un ressort conique (8) enserré entre le collet (12) et le fond (15) du renfoncement (13).
